# EUROPÄISCHE PATENTSCHRIFT

(11) **EP 4 090 574 B1**
(45) Veröffentlichungstag und Bekanntmachung des Hinweises auf die Patenterteilung: **23.10.2024**
(21) Anmeldenummer: 21700670.9
(22) Anmeldetag: 07.01.2021
(51) Int. Cl.: B62D 5/00, B62D 7/15, B62D 9/00

(54) **VERFAHREN ZUR REDUNDANTEN STEUERUNG EINES ELEKTRISCHEN LENKSYSTEMS EINES KRAFTFAHRZEUGES**
METHOD FOR REDUNDANTLY CONTROLLING AN ELECTRICAL STEERING SYSTEM OF A MOTOR VEHICLE
PROCÉDÉ DE COMMANDE REDONDANTE D'UN SYSTÈME DE DIRECTION ÉLECTRIQUE D'UN VÉHICULE À MOTEUR

(30) Priorität: 14.01.2020 DE 102020100719
(43) Veröffentlichungstag der Anmeldung: 23.11.2022
(73) Patentinhaber: thyssenkrupp Presta AG, 9492 Eschen (LI); thyssenkrupp AG, 45143 Essen (DE)
(72) Erfinder: POLMANS, Kristof, 6464 Tarrenz (AT); RAITHER, Wolfram, 9475 Sevelen (CH); LAPIS, Leonard, 9466 Sennwald (CH); MIANO, Carlo Mario, 9492 Eschen (LI)
(74) Vertreter: thyssenkrupp Intellectual Property GmbH
(86) Internationale Anmeldenummer: PCT/EP2021/050165
(87) Internationale Veröffentlichungsnummer: WO 2021/144184

(56) Entgegenhaltungen:
- DE-A1- 102008 000 365
- DE-A1- 102018 107 612
- DE-A1- 102018 115 787
- DE-A1- 102018 207 215
- DE-T2- 60 315 116

## Beschreibung

Die vorliegende Erfindung betrifft ein Verfahren zur Steuerung eines elektrischen Lenksystems eines Kraftfahrzeuges mit den Merkmalen des Oberbegriffs des Anspruchs 1 und ein Kraftfahrzeug, das dazu ausgebildet ist, dieses Verfahren auszuführen.

Elektrische Lenksysteme weisen zumindest einen Aktuator auf, der den Lenkeinschlag wenigstens eines gelenkten Rades steuert. Es sind elektrische Lenksysteme bekannt, bei denen jedes gelenkte Rad von einem separaten Stellglied gesteuert wird. Unter den bekannten elektrischen Lenksystemen gibt es zum Beispiel solche, die keine mechanische Verbindung zwischen den gelenkten Rädern und dem Lenkrad haben, und solche, die ebenfalls keine mechanische Verbindung haben, um den Lenkeinschlag zwischen den gelenkten Rädern selbst zu synchronisieren.

Die sicherheitsrelevanten Anforderungen an ein elektrisches Lenksystem sind äußerst hoch. Das elektrische Lenksystem muss eine derartige Redundanz aufweisen, dass im Falle eines Ausfalls eines Lenkaktuators, das Kraftfahrzeug lenkbar bleibt.

Aus der Übersetzung der europäischen Patentschrift DE 603 15 116 T2 ist ein redundantes Lenksystem mit jeweils einem Aktuator an einem lenkbaren Vorderrad bekannt, wobei im Notbetriebsmodus, welcher bei einem Ausfall eines gegebenen Rad-Stellglieds aktiviert wird, das Steuergerät einen Sollwert eines Ausgleichslenkeinschlags für das vom Ausfall nicht betroffene Vorderrad bestimmt. Als nachteilig erweist sich diese Lösung dahingehend, dass viele Komponenten notwendig sind, um den Notlenkbetrieb zu ermöglichen, was mit einem hohen Kostenfaktor verbunden ist.

Weiterhin ist aus dem Stand der Technik die Offenlegungsschrift DE 10 2008 000 365 A1 bekannt, in der eine Allradlenkung beschrieben ist, bei der in den Radaufhängungen aller Räder des Fahrzeugs mindestens ein Lenker durch einen Steller ersetzt ist, wobei bei Ausfall eines Radstellers, die anderen Radsteller die Lenkaufgabe übernehmen, um eine Lenkbarkeit des Fahrzeugs zu gewährleisten. Hierbei werden ebenfalls viele Komponenten benötigt, um die Redundanz abzubilden.

Aus der DE 10 2018 107612 A1 ist es bekannt, den Ausfall eines Lenksystems durch eine Hinterradlenkung zu kompensieren. In der DE 10 2018 207215 A1 wird vorgeschlagen, ein fehlerhaftes Lenksystem durch elektronische Ansteuerung in eine definierte Winkelstellung zu überführen.

Es ist Aufgabe der vorliegenden Erfindung, ein Verfahren zur Steuerung eines elektrischen Lenksystems eines Kraftfahrzeuges anzugeben, das bei einem Ausfall eines elektrischen Stellglieds, die Spursteuerung des Kraftfahrzeugs gemäß dem Wunsch des Fahrers so weit wie möglich aufrechthalten kann, zumindest um das Kraftfahrzeug in Sicherheit zu bringen.

Diese Aufgabe wird von einem Verfahren zur Steuerung eines elektrischen Lenksystems eines Kraftfahrzeuges mit den Merkmalen des Anspruchs 1 und einem elektrischen Lenksystem sowie einem Kraftfahrzeug, die dazu ausgelegt ist, ein solches Verfahren auszuführen, gelöst. Weitere vorteilhafte Ausbildungen der Erfindung sind den Unteransprüchen zu entnehmen.

Demnach ist ein Verfahren zur Steuerung eines elektrischen Lenksystems eines Kraftfahrzeuges umfassend eine Vorderachslenkung mit einem Vorderachslenksteller, mittels dessen die beiden Vorderräder gekoppelt lenkbar sind und eine Hinterachslenkung mit einem Hinterachslenksteller, mittels dessen die beiden Hinterräder gekoppelt lenkbar sind, vorgesehen, wobei das Verfahren den Verfahrensschritt umfasst:
- Feststellen, dass eine der Lenkungen (Hinterachs- oder Vorderachslenkung) einen Fehler aufweist,
   wobei erfindungsgemäß vorgesehen ist, dass der Vorderachslenksteller und der Hinterachslenksteller selbsthemmend sind, und dass folgende Verfahrensschritte vorgesehen sind:
- Abschalten der fehlerbehafteten Lenkung und Ansteuern der fehlerfreien Lenkung, wobei der Lenksteller der fehlerfreien Lenkung derart angesteuert wird, dass eine aus einer ins Lenkrad eingeleiteten Lenkbewegung abgeleitete Soll-Bewegung des Kraftfahrzeuges erreicht wird oder dass eine von einem autonomen Fahrmodus vorgegebene Soll-Bewegung des Kraftfahrzeuges erreicht wird.

Durch die Bereitstellung von Stellgliedern sowohl an der Vorderachse als auch an der Hinterachse des Kraftfahrzeuges kann eine notwendige Redundanz verteilt werden. Dies ermöglicht die Nutzung von Synergien zwischen reduzierter Ausfallwahrscheinlichkeit und verbesserter Fahrtüchtigkeit, da auf beiden Achsen vollwertige Lenkaktuatoren vorhanden sind. Insbesondere für Fahrzeuge, die mit einer Hinterachslenkung ausgestattet werden müssen, die höhere Lenkwinkel ermöglicht, wird ein Vorteil bei den Gesamtkosten, verglichen mit einem Konzept, das auf einem vollständig redundanten Stellglied an der Vorderachse basiert, erzielt. Ein Fehler beschreibt einen Zustand, in dem die Vorderachslenkung oder die Hinterachslenkung nicht so funktionieren wie erwartet und/oder wie vorgegeben.

Vorzugsweise ist ein vom fehlerfreien Lenksteller gestellter Radlenkwinkel größer als ein Radlenkwinkel des Vorderachslenkstellers im fehlerfreien Zustand beider Lenkungen zum Erreichen derselben Soll-Bewegung des Kraftfahrzeuges wäre. Die Winkellage der Räder der vom Ausfall betroffenen Lenkung kann so durch die fehlerfreie Lenkung kompensiert werden. Vorzugsweise weist das Kraftfahrzeug sowohl einen Vorderachsantrieb als auch einen Hinterachsantrieb auf. Weiterhin ist es denkbar und möglich, dass das Kraftfahrtzeug mehrachsig ausgebildet ist, beispielsweise mit drei Achsen.

In einer vorteilhaften Ausführungsform weist das Kraftfahrzeug einen Hinterradantrieb oder Vorderradantrieb mit einer Torque-Vectoring-Steuerung auf, der im fehlerbehafteten Zustand einer Lenkung die fehlerfreie Lenkung beim Erreichen der Soll-Bewegung unterstützt. Dabei ist es vorteilhaft, wenn das Verfahren folgende Schritte umfasst:
- Ermitteln des Lenkwinkels des Lenkmittels und der Position des Gaspedals;
- Umrechnen dieses Fahrerwunsches anhand eines Fahrzeugmodells in Soll-Gierrate, Soll-Schwimmwinkel, Soll-Längsbeschleunigung und Soll-Querbeschleunigung;
- Berechnen eines Fehlervektors zwischen den Soll-Werten und den entsprechend geschätzten oder gemessenen Ist-Werten, wobei der Fehlervektor den Unterschied zwischen Ist- und Sollzustand wiedergibt.

Vorzugsweise ist weiterhin folgender Verfahrensschritt umfasst:
- Minimieren des Fehlervektors mittels Ansteuern des Hinterachslenkstellers und Torque-Vectoring.

Es ist zudem vorteilhaft, wenn das Kraftfahrzeug eine Steuereinheit des Lenksystems mit einer ersten Untereinheit aufweist, in die der Lenkwinkel des Lenkmittels und die Position des Gaspedals einfließen, wobei aus diesen Parametern ein Fahrerwunsch ermittelt wird, der mit Hilfe eines Kraftfahrzeugmodells auf den aktuellen Kraftfahrzeugzustand umgerechnet wird. Bevorzugt fließen dazu die folgenden gemessenen oder geschätzten Parameter in eine Steuerlogik zur Fehlerkompensation ein: Kraftfahrzeuggeschwindigkeit, Gierrate, Querbeschleunigung, geschätzter Vorderradlenkwinkel oder gemessener Lenkwinkel, und geschätzter Schwimmwinkel. Die Steuerlogik bestimmt dann vorzugsweise einen einzuschlagenden Soll-Hinterradlenkwinkel für die Hinterradlenkung und ein Soll-Differenzmoment für den Vorderradantrieb oder den Hinterradantrieb.

Für den Fall, dass ein Hinterradantrieb zur Verfügung steht, ist es vorteilhaft, wenn folgender Schritt ausgeführt wird: Ansteuern des Hinterradantriebs mittels der Torque-Vectoring-Steuerung, wobei das Ansteuern derart ausgeführt wird, dass zwischen den Hinterrädern ein Differenzmoment entsteht, welches ein Giermoment hervorruft. Das Giermoment kompensiert bevorzugt die durch die blockierte Vorderachslenkung hervorgerufene Seitenkraft, so dass der Schwimmwinkel Null ist und die Vorderräder nicht blockieren.

Für einen Vorderradantrieb gilt vorzugsweise eine analoge Steuerung.

Weiterhin sind ein elektrisches Lenksystem mit einer Steuereinheit vorgesehen, die dazu eingerichtet ist, das zuvor beschriebene Verfahren auszuführen und ein Kraftfahrzeug mit einem solchen elektrischen Lenksystem.

Bevorzugte Ausführungsformen der Erfindung werden nachfolgend anhand der Zeichnung näher erläutert. Gleiche bzw. funktionsgleiche Bauteile sind dabei figurübergreifend mit denselben Bezugszeichen versehen. Es zeigen:
- Figur 1:: eine schematische Darstellung eines Kraftfahrzeugs mit Vorderachs- und Hinterachslenkung mit Ausfall der Vorderachslenkung und Durchfahrt einer Linkskurve,
- Figur 2:: eine schematische Darstellung des Kraftfahrzeugs der Figur 1 mit Ausfall der Vorderachslenkung und Durchfahrt einer Rechtskurve,
- Figur 3:: eine schematische Darstellung eines Kraftfahrzeugs der Figur 1 mit Ausfall der Hinterachslenkung und Durchfahrt einer Linkskurve,
- Figur 4:: eine schematische Darstellung eines Kraftfahrzeugs der Figur 1 mit Ausfall der Hinterachslenkung und Durchfahrt einer Rechtskurve,
- Figur 5:: ein Blockdiagramm einer Steuerung eines elektrischen Lenksystems eines Kraftfahrzeuges im Notlenkbetrieb,
- Figur 6:: ein Blockdiagramm einer Steuerung eines elektrischen Lenksystems eines Kraftfahrzeuges im Notlenkbetrieb, sowie
- Figur 7:: ein Diagramm der Abhängigkeiten von Giermoment, Soll-Schwimmwinkel und Fehlerwinkel der Vorderradlenkung.

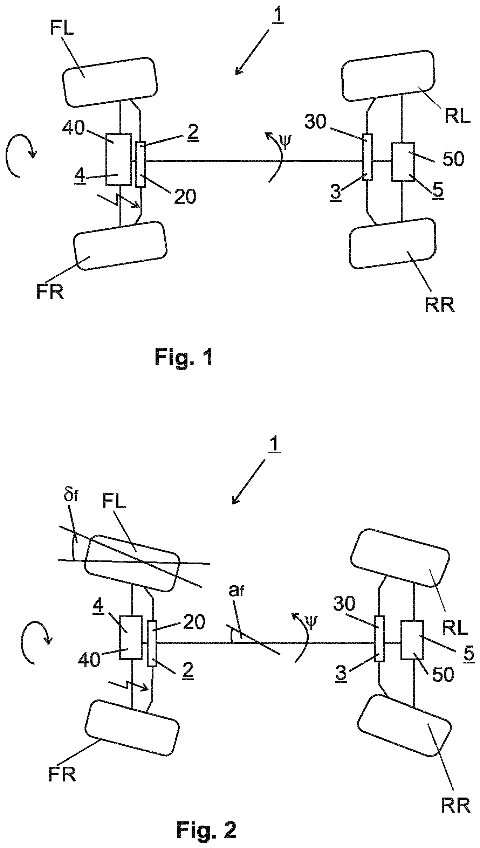

In den Figuren 1 bis 4 ist ein elektrisches Lenksystem 1 mit Vorderachs- und Hinterachlenkung 2,3 und Vorder- und Hinterachsantrieb 4,5 dargestellt. Die Vorderachslenkung 2 weist einen elektrischen Vorderachslenksteller 20, bevorzugt ein Zentralsteller auf, über den beide Vorderräder FL,FR gekoppelt lenkbar sind. Der elektrische Vorderachslenksteller 20 wirkt bevorzugt über ein erstes Zahnstangen-Lenkgetriebe auf die Vorderräder FL,FR. Die beiden Vorderräder FL,FR werden von einem einzelnen Aktuator 40 angetrieben. Die Hinterachslenkung 3 weist einen elektrischen Hinterachslenksteller 30, bevorzugt einen Zentralsteller auf, über den beide Hinterräder RL,RR gekoppelt lenkbar sind. Der elektrische Hinterachslenksteller 30 wirkt bevorzugt über ein zweites Lenkgetriebe auf die Hinterräder RL,RR. Die beiden Hinterräder RL,RR werden ebenfalls von einem einzelnen Aktuator 50 gemeinsam angetrieben. Beide Lenksteller 20,30 sind selbsthemmend ausgebildet und weisen einen größeren Hub als herkömmliche Lenksteller auf.

Für den Fall, dass einer der Lenksteller 20,30 ausfällt, übernimmt der jeweils andere Lenksteller 20,30 die Lenksteuerung.

Die Figuren 1 und 2 zeigen einen Ausfall der Vorderachslenkung 2. Der ausgefallene oder fehlerbehaftete Vorderachslenksteller 20 ist ausgeschaltet und damit in der zuletzt angesteuerten Position fixiert. Der Fahrerwunsch wird mittels eines in ein Lenkrad eingeleiteten Lenkwinkels und der Position des Gaspedals bestimmt und auf den Kraftfahrzeugzustand umgerechnet (wie z. B. Schwimmwinkel, Gierrate, Kraftfahrzeugbeschleunigung). Die berechneten Sollwerte werden an den Hinterachslenksteller 30 und das Torque-Vectoring-System weitergeben, um das Kraftfahrzeug in die vom Fahrer gewünschte Richtung mit der gewünschten Geschwindigkeit und der Gierrate zu steuern.

Die Hinterachslenkung 3 schlägt dabei in diesem Ausführungsbeispiel mit einem höheren Radlenkwinkel in die entsprechende Richtung ein als eine funktionsfähige Vorderachslenkung dies tun würde, um dem Fahrerwunsch nachzukommen.

Figur 1 zeigt das Durchfahren einer Linkskurve. In Figur 2 ist das Durchfahren einer Rechtskurve dargestellt.

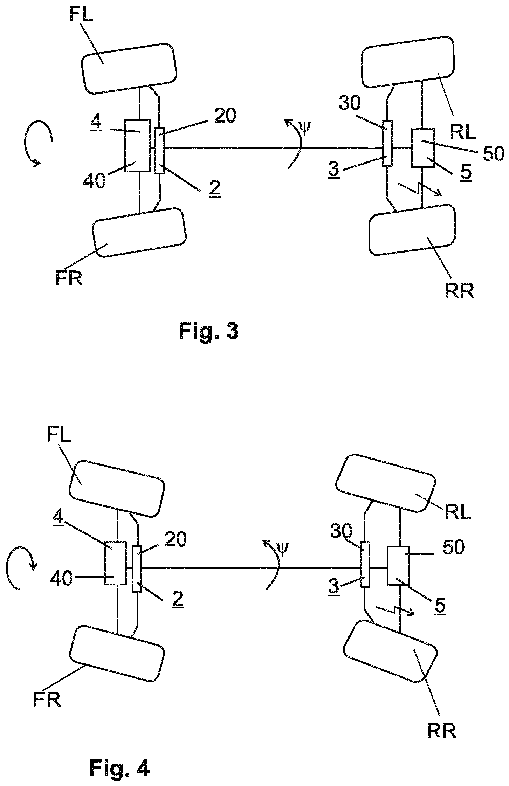

Die Figuren 3 und 4 zeigen das Kraftfahrzeug, wobei dessen Hinterachslenkung 3 ausgefallen ist. Die Vorderachslenkung 2 übernimmt den Notlenkbetrieb. In diesem Fall verbleiben die Hinterräder RR,RL in der zuletzt angesteuerten Position des Lenkstellers 30 fixiert. Die Vorderachslenkung 2 kann eine Fehlstellung der Hinterräder RR,RL kompensieren, indem die Vorderräder FL,FR mit einem höheren Radlenkwinkel beaufschlagt werden als das der Fall bei freibeweglichen Hinterrädern RR,RL wäre, wobei dem Fahrerlenkwunsch nachgekommen wird.

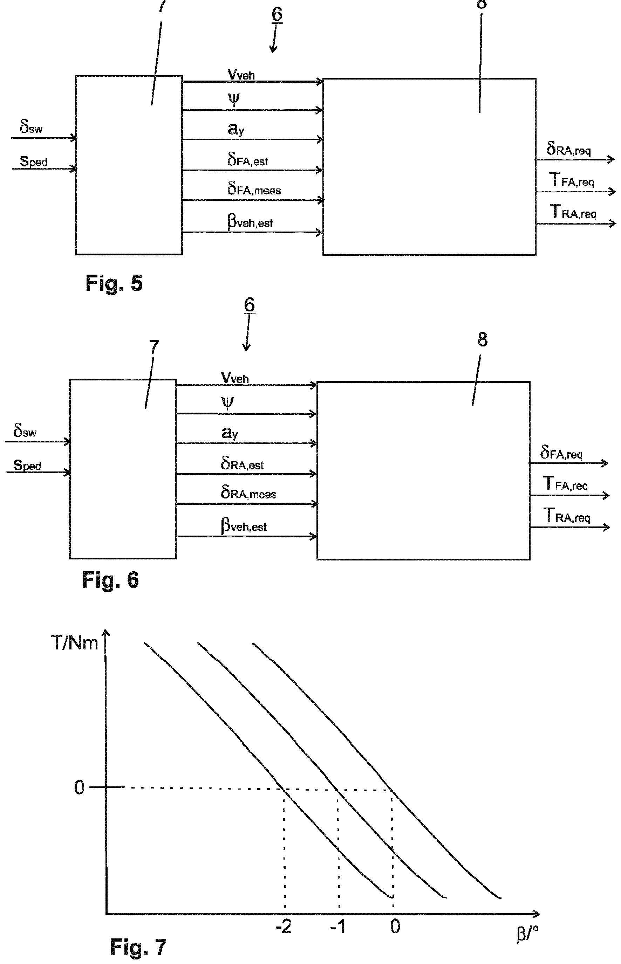

Figur 5 zeigt ein Blockdiagramm einer Steuerung des elektrischen Lenksystems des Kraftfahrzeuges für einen Notlenkbetrieb mittels Hinterachslenkung 3. Die Steuereinheit des Lenksystems 6 weist eine erste Untereinheit 7 auf, in die der Lenkwinkel δ_{SW} des Lenkmittels und die Position des Gaspedals s_{ped} einfließen. Aus diesen Parametern wird ein Fahrerwunsch ermittelt. Der Fahrerwunsch wird dann auf den Kraftfahrzeugzustand umgerechnet. Dazu fließen die folgenden gemessenen oder geschätzten Parameter in eine Steuerlogik zur Fehlerkompensation 8 ein: Kraftfahrzeuggeschwindigkeit vᵥₑₕ, Gierrate ψ, Querbeschleunigung a_{y}, geschätzter Vorderradlenkwinkel δ_{FA,est} oder gemessener Lenkwinkel δ_{FA,meas}, und geschätzter Schwimmwinkel β_{veh,est}. Die Steuerlogik 8 bestimmt einen einzuschlagenden Soll-Hinterradlenkwinkel δ_{RA,req} für die Hinterradlenkung 3 sowie ein Soll-Drehmoment T_{RA,req} für den Hinterradantrieb 5. Zudem wird ein Soll-Drehmoment T_{FA,req} für den Vorderradantrieb 4 bestimmt. Aus den Soll-Drehmomenten wird ein-Differenzmoment ΔT für den Hinterradantrieb 5 gebildet. Durch das Soll-Differenzmoment ΔT entsteht ein Giermoment, welches die durch die blockierte Vorderachslenkung 2 hervorgerufene Seitenkraft kompensiert, so dass der Schwimmwinkel βᵥₑₕ Null ist und die Vorderräder FL,FR nicht blockieren.

Figur 6 zeigt den Zustand, dass die Hinterachslenkung 3 ausfällt. Es fließen entsprechend der Beschreibung für Notlenkbetrieb mittels Hinterachslenkung 3 die Parameter in die Steuerlogik zur Fehlerkompensation 8 ein, wobei ein geschätzter Hinterradlenkwinkel δ_{fr,est} oder ein gemessener Lenkwinkel δ_{RA,meas} in die Fehlerkompensation 8 einfließen. Die Steuerlogik 8 bestimmt einen einzuschlagenden Soll-Vorderradlenkwinkel δ_{FA,req} für die Vorderradlenkung 2 sowie ein Soll-Drehmoment T_{FA,req} für den Vorderradantrieb 4. Zudem wird ein Soll-Drehmoment T_{RA,req} für den Hinterradantrieb 5 bestimmt. Aus den Soll-Drehmomenten wird ein-Differenzmoment ΔT für den Vorderradantrieb 4 gebildet.

Im Detail werden somit bevorzugt folgende Verfahrensschritte ausgeführt:
Ermitteln des Lenkwinkels des Lenkmittels und der Position des Gaspedals und umrechnen dieses Fahrerwunsches anhand eines Fahrzeugmodells in Soll-Gierrate, Soll-Schwimmwinkel, Soll-Längsbeschleunigung und Soll-Querbeschleunigung. Wobei in einem nächsten Schritt anhand der geschätzten oder gemessenen Ist-Gierrate, Ist-Querbeschleunigung, Ist-Längsbeschleunigung und dem Ist-Schwimmwinkel ein Fehlervektor berechnet wird, der den Unterschied zwischen Ist- und Sollzuständen wiedergibt. Dieser Fehlervektor wird dann durch Eingriff von Torque-Vectoring und Hinterachslenkung minimiert.

Das Torque-Vectoring-System des zur Verfügung stehenden Antriebs ermöglicht somit den Ausfall der Vorderachslenkung 2 zu kompensieren.

Figur 7 zeigt ein Diagramm in dem das benötigte Giermoment T gegen den Soll-Schwimmwinkel β_{veh,req} aufgetragen ist. Die drei Kurven geben dabei unterschiedliche Fehlerwinkel der Vorderradlenkung wieder für den Zustand, dass das Fahrzeug sich in einer Geradeausposition befindet. Der Fehlerwinkel entspricht einer Abweichung des jeweiligen Radlenkwinkels von seinem Wert im fehlerlosen Zustand. Von links nach rechts gesehen, beträgt der Fehlerwinkel -2°, -1° und 0°. Das System ist dabei dazu ausgelegt, den Fehlerwinkel zu minimieren.

## Patentansprüche

1. Verfahren zur Steuerung eines elektrischen Lenksystems eines Kraftfahrzeuges umfassend eine Vorderachslenkung (2) mit einem Vorderachslenksteller (20), mittels dessen die beiden Vorderräder (FL,FR) gekoppelt lenkbar sind und eine Hinterachslenkung (3) mit einem Hinterachslenksteller (30), mittels dessen die beiden Hinterräder (RL,RR) gekoppelt lenkbar sind, umfassend den Verfahrensschritt:
• Feststellen, dass eine der Lenkungen (2,3) einen Fehler aufweist;
**dadurch gekennzeichnet, dass** der Vorderachslenksteller (20) und der Hinterachslenksteller (30) selbsthemmend sind, und dass folgende Verfahrensschritte vorgesehen sind:
• Abschalten der fehlerbehafteten Lenkung (2,3) und Bereitstellen der fehlerfreien Lenkung (2,3), wobei der Lenksteller (20,30) der fehlerfreien Lenkung (2,3) derart angesteuert wird, dass eine aus einer ins Lenkrad eingeleiteten Lenkbewegung abgeleitete Soll-Bewegung des Kraftfahrzeuges erreicht wird oder dass eine von einem autonomen Fahrmodus vorgegebene Soll-Bewegung des Kraftfahrzeuges erreicht wird.

2. Verfahren nach Anspruch 1, **dadurch gekennzeichnet, dass** ein vom fehlerfreien Lenksteller (20,30) gestellter Radlenkwinkel größer ist als ein Radlenkwinkel des Vorderachslenkstellers (20) im fehlerfreien Zustand beider Lenkungen (2,3) zum Erreichen derselben Soll-Bewegung des Kraftfahrzeuges wäre.

3. Verfahren nach Anspruch 1 oder 2, **dadurch gekennzeichnet, dass** das Kraftfahrzeug sowohl einen Vorderachsantrieb (4) als auch einen Hinterachsantrieb (5) aufweist.

4. Verfahren nach Anspruch 1 oder 2, **dadurch gekennzeichnet, dass** das Kraftfahrzeug einen Hinterradantrieb mit einer Torque-Vectoring-Steuerung aufweist, der im fehlerbehafteten Zustand einer Lenkung (2,3) die fehlerfreie Lenkung (2,3) beim Erreichen der Soll-Bewegung unterstützt.

5. Verfahren nach Anspruch 4, **dadurch gekennzeichnet, dass** das Verfahren folgende Schritte umfasst:
• Ermitteln eines Lenkwinkels (δ_{SW}) eines Lenkmittels und einer Position eines Gaspedals (s_{ped});
• Umrechnen dieses Fahrerwunsches anhand eines Fahrzeugmodells in Soll-Gierrate, Soll-Schwimmwinkel, Soll-Längsbeschleunigung und Soll-Querbeschleunigung;
• Berechnen eines Fehlervektors zwischen den Soll-Werten und entsprechend geschätzten oder gemessenen Ist-Werten, wobei der Fehlervektor den Unterschied zwischen Ist- und Sollzustand wiedergibt.

6. Verfahren nach Anspruch 5, **dadurch gekennzeichnet, dass** folgender Verfahrensschritt weiterhin umfasst ist:
• Minimieren des Fehlervektors mittels Ansteuern des Hinterachslenkstellers und Torque-Vectoring.

7. Verfahren nach Anspruch 6, **dadurch gekennzeichnet, dass** der folgende Verfahrensschritt umfasst ist:
• Ansteuern des Hinterradantriebs mittels der Torque-Vectoring-Steuerung, wobei das Ansteuern derart ausgeführt wird, dass zwischen den Hinterrädern (RL,RR) ein Differenzmoment (ΔT) entsteht, welches in ein Giermoment (T) des Kraftfahrzeuges resultiert.

8. Elektrisches Lenksystem (1) mit einer Steuereinheit, die dazu eingerichtet ist, das Verfahren nach einem der vorhergehenden Ansprüche durchzuführen.

9. Kraftfahrzeug mit einem elektrischen Lenksystem (1) nach Anspruch 8.

## Claims

1. Method for controlling an electric steering system of a motor vehicle comprising a front axle steering system (2) with a front axle steering actuator (20), by means of which the two front wheels (FL, FR) can be steered in a coupled manner, and a rear axle steering system (3) with a rear axle steering actuator (30), by means of which the two rear wheels (RL, RR) can be steered in a coupled manner, comprising the method step:
• Determining that one of the steering systems (2, 3) has a fault;
**characterized in that** the front axle steering actuator (20) and the rear axle steering actuator (30) are self-locking, and **in that** the following method steps are provided:
• Switching off the faulty steering (2, 3) and providing the fault-free steering (2, 3), wherein the steering actuator (20, 30) of the fault-free steering (2, 3) is actuated in such a way that a desired movement of the motor vehicle derived from a steering movement introduced into the steering wheel is achieved or that a desired movement of the motor vehicle specified by an autonomous driving mode is achieved.

2. Method according to claim 1, **characterized in that** a wheel steering angle set by the fault-free steering actuator (20, 30) is greater than a wheel steering angle of the front axle steering actuator (20) would be in the fault-free state of both steering systems (2, 3) in order to achieve the same desired movement of the motor vehicle.

3. Method according to claim 1 or 2, **characterized in that** the motor vehicle has both a front axle drive (4) and a rear axle drive (5).

4. Method according to claim 1 or 2, **characterized in that** the motor vehicle has a rear-wheel drive with a torque vectoring control system which, in the faulty state of a steering system (2, 3), assists the fault-free steering system (2, 3) in achieving the desired movement.

5. Method according to claim 4, **characterized in that** the method comprises the following steps:
• Determining a steering angle (δ_{SW} ) of a steering device and a position of an accelerator pedal (s_{ped} );
• Conversion of this driver request into target yaw rate, target slip angle, target longitudinal acceleration and target lateral acceleration using a vehicle model;
• Calculation of an error vector between the target values and corresponding estimated or measured actual values, whereby the error vector reflects the difference between the actual and target state.

6. Method according to claim 5, **characterized in that** the following method step is further included:
• Minimizing the error vector by controlling the rear axle steering actuator and torque vectoring.

7. Method according to claim 6, **characterized in that** the following method step is included:
• Actuation of the rear wheel drive by means of the torque vectoring control, whereby the actuation is carried out in such a way that a differential torque (ΔT) is generated between the rear wheels (RL, RR), which results in a yaw moment (T) of the motor vehicle.

8. An electric steering system (1) comprising a control unit adapted to perform the method according to any one of the preceding claims.

9. Motor vehicle with an electric steering system (1) according to claim 8.

## Revendications

1. Procédé de commande d'un système de direction électrique d'un véhicule automobile comprenant une direction d'essieu avant (2) avec un actionneur de direction d'essieu avant (20), au moyen duquel les deux roues avant (FL, FR) peuvent être dirigées de manière couplée, et une direction d'essieu arrière (3) avec un actionneur de direction d'essieu arrière (30), au moyen duquel les deux roues arrière (RL, RR) peuvent être dirigées de manière couplée, comprenant l'étape de procédé :
• constater que l'une des directions (2, 3) présente un défaut ;
**caractérisé en ce que** le dispositif de réglage de la direction de l'essieu avant (20) et le dispositif de réglage de la direction de l'essieu arrière (30) sont autobloquants, et **en ce que** les étapes de procédé suivantes sont prévues :
• désactivation de la direction défectueuse (2, 3) et mise à disposition de la direction sans défaut (2, 3), l'actionneur de direction (20, 30) de la direction sans défaut (2, 3) étant commandé de telle sorte qu'un mouvement de consigne du véhicule automobile, dérivé d'un mouvement de direction introduit dans le volant, est atteint ou qu'un mouvement de consigne du véhicule automobile, prédéfini par un mode de conduite autonome, est atteint.

2. Procédé selon la revendication 1, **caractérisé en ce qu'**un angle de braquage de roue établi par l'actionneur de direction sans défaut (20, 30) est supérieur à un angle de braquage de roue de l'actionneur de direction de l'essieu avant (20) dans l'état sans défaut des deux directions (2, 3) pour atteindre le même mouvement de consigne du véhicule automobile.

3. Procédé selon la revendication 1 ou 2, **caractérisé en ce que** le véhicule automobile présente à la fois un entraînement d'essieu avant (4) et un entraînement d'essieu arrière (5).

4. Procédé selon la revendication 1 ou 2, **caractérisé en ce que** le véhicule automobile présente un entra nement des roues arrière avec une commande Torque Vectoring qui, dans l'état défectueux d'une direction (2, 3), aide la direction (2, 3) sans défaut à atteindre le mouvement de consigne.

5. Procédé selon la revendication 4, **caractérisé en ce que** le procédé comprend les étapes suivantes :
• Déterminer un angle de braquage (δ_{SW} ) d'un moyen de direction et une position d'une pédale d'accélérateur (s_{ped} ) ;
• Conversion de ce souhait du conducteur à l'aide d'un modèle de véhicule en taux de lacet théorique, angle de flottement théorique, accélération longitudinale théorique et accélération transversale théorique ;
• calculer un vecteur d'erreur entre les valeurs de consigne et des valeurs réelles estimées ou mesurées de manière correspondante, le vecteur d'erreur reflétant la différence entre l'état réel et l'état de consigne.

6. Procédé selon la revendication 5, **caractérisé en ce que** l'étape de procédé suivante est en outre comprise :
• Minimisation du vecteur d'erreur au moyen de la commande de l'actionneur de direction de l'essieu arrière et du torque vectoring.

7. Procédé selon la revendication 6, **caractérisé en ce qu'**il comprend l'étape de procédé suivante :
• commander l'entraînement des roues arrière au moyen de la commande de vectorisation du couple, la commande étant exécutée de telle sorte qu'il se forme entre les roues arrière (RL, RR) un couple différentiel (ΔT) qui résulte en un couple de lacet (T) du véhicule automobile.

8. Système de direction électrique (1) comprenant une unité de commande agencée pour mettre en oeuvre le procédé selon l'une quelconque des revendications précédentes.

9. Véhicule automobile avec un système de direction électrique (1) selon la revendication 8.
